# EUROPEAN PATENT APPLICATION

(11) **EP 3 734 835 A1**
(43) Date of publication of application: **04.11.2020**
(21) Application number: 19305546.4
(22) Date of filing: 29.04.2019
(51) Int. Cl.: H02S 20/23

(54) **PROTECTOR FOR ELECTRIC CONNECTIONS IN A PHOTOVOLTAIC ASSEMBLY**

(71) Applicant: Total Solar, 92400 Courbevoie (FR)
(72) Inventor: CASSAGNE, Valérick, 91470 LIMOURS (FR)
(74) Representative: Croonenbroek, Thomas Jakob

(57) **Abstract**

The invention relates to a protector for connection cables (21) and junction boxes (15a, 15b) for photovoltaic modules (1, 1a, 1b, ...) in a photovoltaic assembly (100), characterized in that it comprises :
- a cover plate (33), with dimensions sufficient to cover, when installed in the photovoltaic assembly between adjacent corners of at least two neighbouring photovoltaic modules (1, 1a, 1b, ...), the junction boxes and at least a portion of connecting cables (21) of said photovoltaic modules (1, 1a, 1b, ...), when installed,
- a spacing element (35), situated, when installed, between the cover plate (33) and a roof or support for the photovoltaic assembly (100), maintaining said cover plate (33) and roof or support at a distance corresponding to at least a maximum height of the photovoltaic modules (1, 1a, 1b, ...), attached, when assembled, to the cover plate (33).

## Description

The present invention relates to a protector for electric connections in a photovoltaic assembly, in particular for installations on a roof or surface. The photovoltaic assembly comprises photovoltaic modules with photovoltaic cells for generating electrical power from solar radiation, and different cables and electrical devices for collecting the generated electrical current.

Photovoltaic modules comprise a flat support sheet or plate, photovoltaic cells and connecting elements such as junction boxes. They allow generation of electrical current using solar radiation as energy source. The installation of photovoltaic modules on roofs offers an economically and ecologically interesting power source, either as primary electric power source or as a secondary, additional source.

The term "photovoltaic module" is defined in the norm IEC-TS61836 as the smallest available assembly of several photovoltaic cells interconnected on a common support element. It can for example come in form of a panel.

Photovoltaic modules can be obtained by encapsulating the cells in resin or other material, for example by lamination, with the junctions embedded in boxes on the front side.

The laminated photovoltaic modules are integrated in a photovoltaic assembly, comprising a plurality of modules, connection cables. It is known to place the photovoltaic modules against the roof surface to minimize the occupied space and overall weight of the photovoltaic assembly and to facilitate the installation process of the assembly.

The photovoltaic modules are in particular arranged in lines and columns. To interconnect the modules, cables are arranged between their junction boxes. The cables are for example connected through socket and plug connections.

In the case of flat photovoltaic modules installed directly against a flat surface such as a flat or inclined roof, a wall or pit heap, the junction boxes and cables have to be situated on the front surface of the modules.

As the photovoltaic modules have a reduced height (orthogonally to the roof or surface), rainwater is likely to overflow the panels, and thus to reach the junction boxes and cables.

The cables, connections and junction boxes can consequently be exposed to the sunlight, the rain, temperature variations and other exterior meteorological influences which can deteriorate their components, and in turn cause short-circuits and other potentially critical and dangerous failures.

The potential need for intervention and repairs over time is elevated, while the overall electrical efficiency of the photovoltaic assembly is reduced.

It is known to embed the cables in hollow beams, cable trays or sleeves. However, the known solutions are generally costly, require additional installation steps and/or are difficult to apply to the particular case of flat modules installed directly against a flat surface.

Moreover, pooling rainwater can stagnate and deteriorate the cables and junction boxes, while dirt accumulated can smudge the photovoltaic cells and reduce the efficiency of the cells.

In the case of flat photovoltaic modules implemented directly against a flat surface, the additional cable trays will generate shadows over the solar cells, in particular during the morning or evening hours. The generated shadow will reduce the overall efficiency of the photovoltaic assembly or require the modules to be installed further apart from one another.

In order to overcome the aforementioned drawbacks, the invention proposes a protector for connection cables and junction boxes for photovoltaic modules in a photovoltaic assembly, characterized in that it comprises:
- a cover plate, with dimensions sufficient to cover, when installed in the photovoltaic assembly between adjacent corners of at least two neighbouring photovoltaic modules, the junction boxes and at least a portion of connecting cables of said photovoltaic modules when installed,
- a spacing element, situated, when assembled between the cover plate and a roof or support of the photovoltaic assembly, maintaining said cover plate and the roof or support of the photovoltaic assembly at a distance corresponding to maximum height of the photovoltaic modules, attached, when assembled, on one end to the cover plate.

The protector covers, in a photovoltaic assembly the junction boxes and connection cables, and shields them from most of the direct rain impact and the direct sunlight.

The protector according to the invention may also present one or more of the following features taken separately or in combination.

It further comprises a base element, configured to be, when installed, in contact with the roof or support and attached to the end of the spacing element opposite the cover plate.

The spacing element is a column at the centre of the cover plate and of the base element with a square, rectangular or polygonal cross section.

It may comprise at least two spacing elements in form of feet attached to a peripheral portion of the cover plate.

The base element and the rim may be rectangular and in the spacing element is placed in a central portion of the base element and the cover plate.

The base element may comprise an elevated central portion of said base element, elevated with respect to the plane of the roof or support in a direction perpendicular to said plane, and in that the connecting cables between neighbouring modules rest at least partially on said elevated central portion when the photovoltaic assembly is assembled.

The elevated central portion of the base element comprises two lateral walls elevating said central portion, and openings on its sides to form a passage for flowing water under the elevated central portion.

The elevated central portion may comprise at least one cable management device.

The top of the spacing element can be situated, when installed at a height comprised between 100% and 120% of a maximal height of the photovoltaic module.

The cover plate may comprise a sloping outer rim, which extends beyond and below the upper exterior corners of the junction boxes when assembled.

It may comprise a flat outer portion of the base element that extends in parallel fashion to the roof or support of the photovoltaic assembly.

The spacing element may be at least partially integrally formed with either the base element or the cover plate, and respectively the cover plate, the base element or the spacing element may comprise snap-in attaching means with the spacing element.

The spacing element, the cover plate and the base element may be integrally formed with each other.

The protector may be made of dielectric material.

The invention also relates to the associated photovoltaic assembly characterized in that it comprises:
- a plurality of photovoltaic modules, each photovoltaic module comprising:
   ▪ a laminate,
   ▪ a plurality of photovoltaic cells, carried by the laminate,
   ▪ at least two junction boxes, attached to a front side of the laminate, placed in corner portions along a common side of the laminate parallel to the alignment
- connection cables, spanning between the junction boxes of neighbouring photovoltaic modules,
   the photovoltaic modules being arranged so that junction boxes of two neighbouring photovoltaic modules face each-other with a gap between said photovoltaic modules,
- at least one protector according as previously mentioned, disposed in the gap between the neighbouring photovoltaic modules covering junction boxes and connection cables of neighbouring photovoltaic modules.

The photovoltaic assembly may comprise two lines or rows of photovoltaic modules, arranged in symmetrical fashion around a central alignment axis with their junction boxes facing said central alignment axis, the protectors covering two or four junction boxes of neighbouring photovoltaic modules in the photovoltaic assembly.

The connection cables may be attached or disposed on the elevated central portion of the base element when assembled.

The connection cables may be attached or disposed on the spacing element when assembled.

The connection cables may be attached or disposed on the lower side of the cover plate, facing the roof or support when assembled.

In the photovoltaic assembly:
- the laminate of the photovoltaic modules may be rectangular,
- the photovoltaic modules may be arranged in a column or line along an alignment axis, with sides of the rectangular laminate parallel to the alignment axis,
- the junction boxes may be monopole junction boxes, each photovoltaic module having two junction boxes attached in corner portions of the laminate of a common side of said laminate parallel to the alignment axis.

The photovoltaic modules may be flexible laminated photovoltaic modules.

Other characteristics and features of the invention will become apparent in the description hereafter, given in an exemplary and non-limiting fashion, in combination with the figures, among which:
- figure 1 is a schematic view of part of a photovoltaic assembly according to one embodiment of the invention,
- figure 2 is a schematic view of a single module of the assembly of figure 1,
- figures 3a and 3b are schematic views of a protector according to two different embodiments of the invention,
- figure 4 is a cut-away view of a protector incorporated above the junction boxes of neighbouring photovoltaic modules,
- figure 5 is a schematic view of a protector according to another embodiment of the invention,
- figure 6 is cut-away view of the protector of figure 5, incorporated above the junction boxes of neighbouring photovoltaic modules.

The description refers to particular embodiments, represented in the figures. In particular, the same reference applies to the same element or an equivalent element in all embodiments. Also, different embodiments can be obtained by slightly modifying or combining the different embodiments.

Adjectives and characteristics such as "above" "under" "horizontal" "vertical" etc. are given in relationship with the figures.

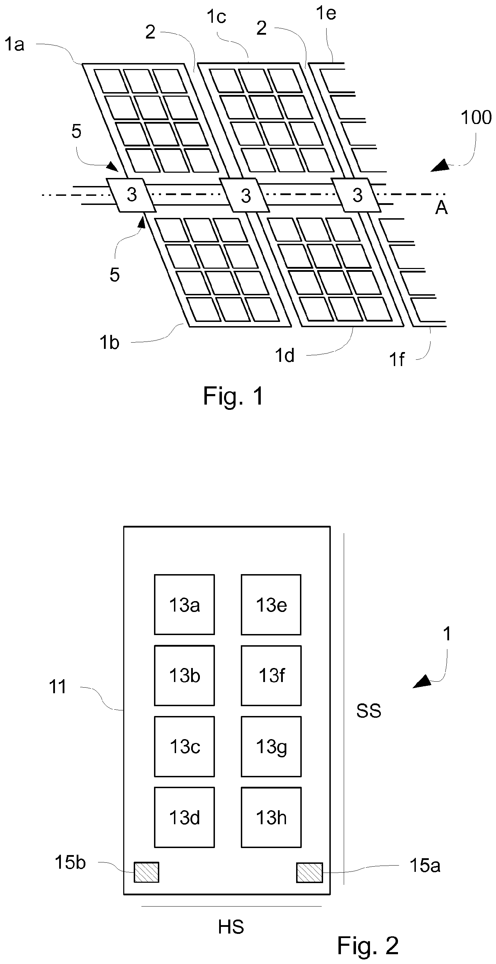

Figure 1 is a schematic representation in perspective of a photovoltaic assembly 100, arranged on a roof. The roof is for example the flat or sloped roof of a habitat, storage or other building such as a house, garage, hut, storage unit etc.

In the case of a photovoltaic assembly on a flat roof or surface, one can generally define two orthogonal directions, corresponding to row and column directions, which are generally perpendicular to each other while remaining horizontal.

The photovoltaic assembly 100 comprises a plurality of photovoltaic modules labelled 1a, 1b, 1c etc. In particular, the modules 1a, 1b, 1c etc. are arranged in rows and columns. The reference 1 is used to designate any photovoltaic module without consideration of order in the assembly 100. In figure 1, the represented photovoltaic assembly 100 comprises two horizontal rows of modules labelled 1a to 1f. The modules 1a to 1f are then connected either in series or parallel according to the desired voltage and current output.

The photovoltaic modules 1a to 1f comprise in particular a flat rectangular main laminate (height lower than e.g. 20mm), and are attached directly to the roof. The modules 1a to If are in particular arranged with gaps 2 of several centimetres (2 to 10cm for example) between them. Said gaps 2 can be reduced with respect to the existing assemblies, where they are usually of at least 20cm, so that a given surface of roof or support can be covered with a greater density of panels 1a, 1b, etc. and consequently yield more power.

The photovoltaic modules 1a, 1b, etc. of the two horizontal rows are in particular arranged in symmetrical fashion with respect to a horizontal alignment axis A, so that their junction boxes (not visible in figure 1) face said axis A.

The photovoltaic assembly 100 comprises cable and junction box protectors 3, which are placed in the corner areas where the corners 5 of neighbouring photovoltaic modules 1a to If are close to each other. Said areas are also where the gaps 2 between the photovoltaic modules 1a, 1b, etc. parallel to the column direction cross the gaps 2 between photovoltaic modules 1a, 1b, etc. along the row direction.

The protectors 3 cover an extremal portion of the corners 5 of the photovoltaic modules 1a, 1b, etc. by overlapping said portion of a corner 5 so as to shield the cables and connecting elements from direct rain impact and the light of the sun.

The modules 1a, 1b etc. are connected to an electric grid (not represented) such as a domestic or public electric network, for example through inverters and voltage transformers, or to a storage system such as a battery.

A single module, labelled 1, is represented in front view in figure 2. The module 1 comprises a module body in form of a laminate 11, here in particular of rectangular shape. Laminates 11 are interesting in that they provide a light, slightly deformable body for the module 1. However, other embodiments are obtained by using other types of module bodies, such as glass or rigid plastic materials.

The module 1 comprises photovoltaic cells 13a, 13b etc. carried by the laminate 11 arranged in columns and in rows , parallel to the rows and columns of modules 1a, 1b, etc. The reference 13 is hereafter used to designate any photovoltaic cell in a module without consideration of position in said module.

The photovoltaic cells 13a, 13b etc. are for example monocrystalline silicon cells, thin enough (few tens or hundreds of micrometres) so as to remain flexible in that a curvature can be applied to them without loss of structural and electric properties. The laminate 11 may then in particular comprise a flexible transparent sheet. The cells 13 are laminated in the laminate 11 with an encapsulating resin and a transparent front sheet to form a laminated photovoltaic module 1. Other types of cells such as polycrystalline or amorphous silicon, cadmium telluride, gallium arsenide etc. can also be used.

The embodiment of figure 2 comprises eight photovoltaic cells labelled 13a to 13h. Said cells 13a to 13h are arranged in two columns of each four cells 13a, 13b etc.

The module 1 also comprises two monopole junction boxes 15a, 15b, comprising a first junction box 15a placed respectively at the corner between one side perpendicular to the alignment axis A and a lower side parallel to the alignment axis, and a second junction box 15b at the corner between the second side perpendicular to the alignment axis A and the lower side parallel to the alignment axis A. Since the module 1 is flat and will be installed directly against the roof or surface, the junction boxes 15a, 15b are placed on the front surface of the laminate 11.

In particular, the junction boxes 15a, 15b are placed along a common side of the laminated laminate 11: a first one 15a in proximity to a corner 5 of a one side parallel to the alignment of photovoltaic modules 1 (axis A of figure 1), here the lower one, and a side orthogonal to the alignment, and a second one 15b in proximity to a corner of the same side parallel to the alignment and the other side orthogonal to said alignment.

The junction boxes 15a, 15b are not represented in figure 1 as they are covered by the protectors 3, with one to four junction boxes 15a or 15b in the corners of the protectors 3. The protectors 3 at the extremities of the strings of modules 1a, 1b, ... in figure 1, for example, shield only two junction boxes 15a, 15b.

The junction boxes 15a, 15b and the cells 13a to 13h in figure 2 are connected through connecting electric tracks, in series and/or parallel to reach a predetermined electric power output in current and voltage. The electric track comprises for example metallic ribbons encapsulated with the cells 13a to 13h. For example, the cells 13a to 13d of a column may be connected in series, while the columns themselves are connected in parallel, or the cells 13a to 13h of a line may be connected in series, while the lines are connected in parallel.

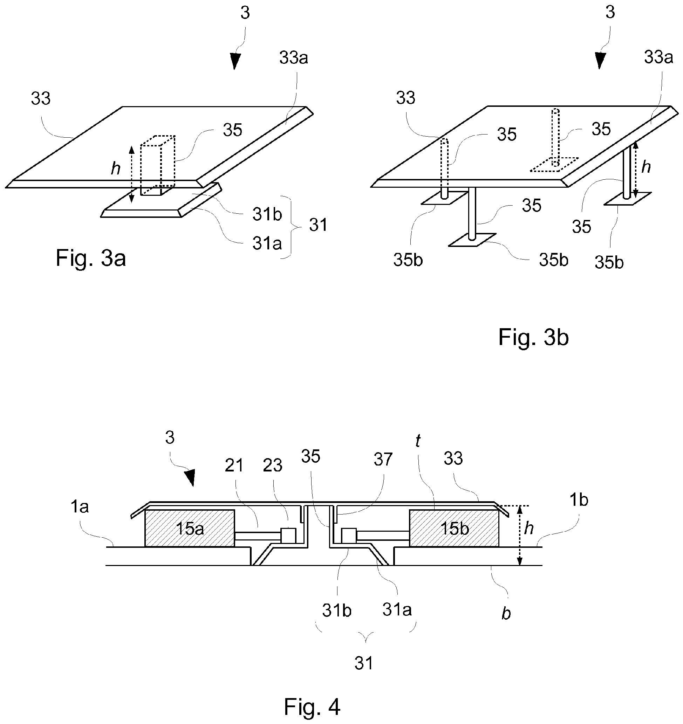

Two examples of a protector 3 are represented in perspective in figures 3a and 3b.

The protector 3 of figure 3a comprises a base element 31. Said base element 31 is placed, when assembled, on the roof or support for the photovoltaic assembly 100.

The protector 3 also comprises cover plate 33. The base element 31 and the cover plate 33 are maintained in a relative position by a spacing element 35, placed in a central portion of the base element 31 and cover plate 33. The base element 31 and the cover plate 33 are parallel to the plane of the roof or support when installed, while the spacing element 35 is perpendicular to said plane. According to the represented embodiment, the base element 31 and the cover plate 33 are flat rectangular plates or panels, in particular in shape of a square.

The base element 31 and cover plate 33 may be curved or diamond shaped in alternative embodiments.

The spacing element 35 is here in particular a column having a square or rectangular or polygonal cross-section, for easier assembly. Other embodiments could comprise separate fingers as spacing element 35, for example to free a central portion of the protector 3.

The height *h* reached by the top of the spacing element 35 from the roof or support (see also figure 4), taken perpendicularly to the plane of the modules 1 and roof or support, is equal at least to a maximum height of the modules 1a, 1b etc. In particular, said maximum height can correspond to the added heights of the laminate 11 and the junction boxes 15a, 15b it covers when installed, measured between a bottom side b of the laminate 11 and a top face t of the junction boxes 15a, 15b.

If other elements of the modules 1a, 1b, etc. reach a height, taken perpendicular to the plane of the roof or support, more important than the aforementioned elements, the maximum height is considered to be the height of said elements (e.g. connectors, see below).

In particular, said height *h* of the spacing element 35 is comprised between 100% and 120% of the maximum height, here in particular the added heights of the laminate 11 and the junction boxes 15a, 15b. More particularly, said height can be restricted between 100% and 105% of the maximum height.

In keeping the height of the spacing element 35 in the aforementioned value ranges, the shadow projected by the protector 3 is reduced, and only slightly increased when compared to the shadow of the junction boxes 15a, 15b. The impact of said shadow on the efficiency of the assembly 100 is consequently reduced.

The protector 3 is in particular made of a dielectric material. In particular, a plastic material or polymer can be used, for lightness and reduced fabrication costs. The polymer or plastic may be loaded with glass fibres and may further contain fire retardants in its composition. In particular, the protector 3 can be moulded, for example through injection moulding.

In particular, the use of a dielectric material ensures that, should a cable or connection fail, a repairer can manipulate the protector 3 without risk of getting shocked due to an electric contact with the faulty cable or connection.

In figure 3b, the protector 3 comprises a cover plate 33, rectangular or square, and at least two, here four, spacing elements 35 in form of feet. In particular, the protector does not comprise a base element 31 in form of a plate. Instead, the feet forming spacing elements 35 may comprise a lower surface 35a that can be glued to the roof or support of the photovoltaic assembly 100, or attached to the laminate 11 of the photovoltaic modules 1.

The feet forming the spacing elements 35 are attached to a peripheral portion of the cover plate 33, so that a central portion of the space under the cover plate 33 is free. In said central free space elements of the photovoltaic assembly such as coils of connection cable, a connector or separate junction or box etc. can be implemented. The feet may in particular be insertable in corresponding holes in the laminates 11 of the photovoltaic modules 1.

Figure 4 is a cutaway view of a portion of the photovoltaic assembly 100, centred on the installed protector 3 of figure 3a, with a portion of two neighbouring modules 1a, 1b comprising one junction box 15a, 15b of each module 1a, 1b.

In particular, when installed, the protector 3 covers generally two to four junction boxes 15a, 15b of neighbouring photovoltaic modules 1a, 1b.

The protector 3 of figure 4 comprises two distinct pieces: one comprises the base element 31 and the spacing element 35, the other comprises the cover plate 33 and reversible snap-in attaching means 37 binding, when installed, the cover plate 33 with the top portion of the spacing element 35.

According to another, non-represented embodiment, the spacing element 35 could be integrally formed with the cover plate 33 instead, and the base element 31 would comprise the snap-in attaching means 37.

According to a third embodiment, both the base element 31 and the cover plate 33 comprise snap-in attaching means 37, and the spacing element forms at least one separate piece. The spacing element 35 may also be separated in two parts, one being integrally formed with the base element 31, and the other being integrally formed with the cover plate 33. In that case, the spacing element itself would comprise snap-in attaching means.

According to yet another embodiment, the base element 31, the cover plate 33 and the spacing element 35 are integrally formed with each other as one single piece, for example through injection moulding.

An outer portion 31a of the base element 31 comprises or forms spacing means, here in form of inclined walls, which elevate the central portion 31b of said base element 31 with respect to the plane of the roof or support.

Connecting cables 21 between neighbouring modules 1a, 1b rest on said elevated portion when the photovoltaic assembly 100 is assembled. In particular, the connecting cables 21 are connected using a, for example, socket and plug connector 23, said connector 23 resting on the elevated central portion 31b of the base element 31.

The connecting cables 21 connect for example the modules 1 in strings, and the strings are in turn connected in parallel.

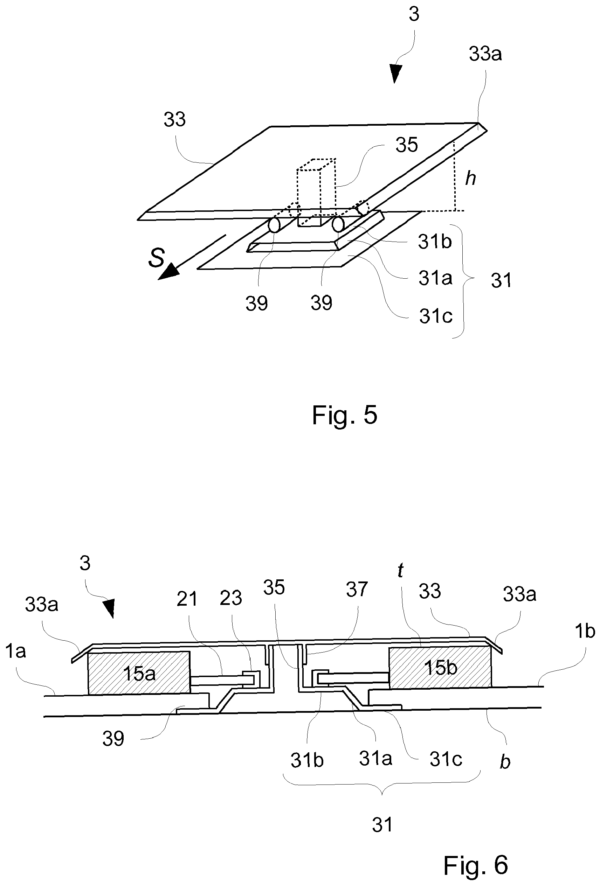

To maintain a portion of the connection cable 21 and/or the connector 23 in place on the elevated central portion 31b, the elevated central portion 31b can comprise a cable management element attached to it (see figure 5). The cable management element can be, for example, a hook, a cable clamp, clip or tie, or a segment of cable harness.

The connection cables 21 and connectors 23, when in place, are either wrapped around the spacing element 35 or inserted in the cable management element and maintain the protector 3 in place. Additional fixation means (glue, screws etc.) can also be implemented.

In particular, the central portion 31b of the base element 31 can comprise an embedded contact segment, with two sockets or plugs at the ends, which are connected to connecting cables 21, in turn connected to the junction boxes 15a, 15b.

To access the connector 23 or more generally the connecting cable 21, a technician just has to remove the cover plate 33, and to perform the replacement or repairing operations on said connecting cable 21, and then put the cover plate 33 back in place.

According to another embodiment, the connector 23, cable management element or embedded contact can be placed on the lower side of the cover plate 33 (side facing the roof or support when installed) or even on the sides of the spacing element 35 instead of the elevated portion 31b of the base element 31.

If the height of the connector 23 added to that of the elevated central portion 31a is more than the added heights of the laminate 11 and the junction boxes 15a, 15b, the height *h* of the spacing element 35 is comprised between 100% and 120% of the height of the connector 23 added to that of the elevated central portion 31a. More particularly, said height can be restricted between 100% and 105% of said added heights.

In alternative embodiments, the connection cables of two neighbouring modules 1a, 1b along the alignment axis A can either remain on the same transversal side of the spacing element 35 or be crossed around said spacing element 35, or even, if cable length permits, wound around the spacing element 35 to contribute to the attachment of the protector 3.

The connecting cables 21 and the associated connecting system 23 (in case of a modular assembly) are consequently elevated above the water flow, for example of rain, which will flow in a thin layer above the roof or support.

The outer rim 33a of the cover plate 33 is inclined downwards, and extends beyond and below the upper exterior corners of the junction boxes 15a, 15b when assembled. This inclined outer rim 33a evacuates the rainwater so as to limit exposure of the junction boxes 15a, 15b.

To attach the base element 31 to the roof or support, expanding and sticking foam such as expanding polyurethane foam can be injected in the hollow space under the elevated central portion 31b of the base element 31. Said injection can in particular be carried out through the hollow spacing element 35.

Other attaching means could comprise gluing the outer rim 31a of the base element, or screws, rivets or nails if the support allows etc.

One particular embodiment of a protector 3 is represented in figure 5, with integrated attaching means to the photovoltaic modules 1a, 1b.

The elevated central portion 31b of the base element 31 comprises cable holders 39 that are attached to or integrally formed with said elevated central portion 31a. Said cable holders 39 can for example be hooks, clamps or a portion of embedded cable with plugs to connect the connection cables 21. The connection cables 21, when inserted, clamped or connected to the cable holders 39 contribute to maintaining the protector 3 in its intended place. Additional holding means or fixations for the protector 3 are consequently optional.

A flat outer portion 31c of the base element 31 of the protector 3 extends beyond the inclined outer rim 31a, in parallel fashion to the roof or support. Said flat outer portion 31c can be covered with glue to bind the base element 31 to the roof or support.

To attach the protector to the photovoltaic modules 1a, 1b, the corner portion 5 of said modules 1a, 1b are placed over the flat portion 31c of the base element 31, so as to weigh it down. Additional screws, nails or rivets can then be implemented through both the corner portions 5 of the modules 1a, 1b and the flat portion 31c, so as to maintain the base element 31 and the modules 1a, 1b in place. This configuration is represented in figure 6, which a cut-away view similar to figure 4.

The embodiment of figures 5 and 6 is also adapted for installation on an inclined roof or surface, with a sloping direction S. The sloping direction is the direction in which declivity is maximal, and the mean direction of rainwater flowing on the considered roof or surface. The slope may in particular be minimal (less than e.g. 2°) to control water evacuation for example to a specific draining hole, gutter or grill.

In the embodiment of figures 5 and 6, the elevated central portion 31b of the base element 31 comprises inclined walls, parallel to the sloping direction S, so that the elevated portion of the base element 31 presents openings on the sides perpendicular to the sloping direction S. The water flow can consequently pass in the passage under said central portion 31b formed by the walls and thus under the elevated connection cables 21 that are placed on said elevated central portion 31.

If the direction of water flow is unknown or may change, the base may comprise vertical feet or pillars instead of lateral walls, for example cylindrical in shape, and the elevated central portion 31b may be attached to the top end of the feet.

The protectors 3 and photovoltaic modules 1 with rectangular or square shapes according to the invention are particularly suitable for photovoltaic assemblies 100 in rows or columns. Other geometrical configurations, such as hexagonal or circular element 31 cover plates 33 and base elements 31 allow for the protector 3 to be adapted to other types of photovoltaic assemblies 100. For example the roof or surface may be paved with hexagonal modules 1, or modules 1 not arranged in columns and rows, but simply arranged so that their junction boxes 15a, 15b face each other, with a gap in between.

The particular position of the junction boxes 15a, 15b along a common side parallel to the alignment axis A allows for a reduced length of connecting cables 21 while the protector covers two to four junction boxes 15a, 15b of neighbouring photovoltaic modules 15a, 15b.

The obtained photovoltaic assembly 100 can therefor present an extended lifetime, and/or need less frequent interventions for maintenance.

## Claims

1. Protector for connection cables (21) and junction boxes (15a, 15b) for photovoltaic modules (1, 1a, 1b, ...) in a photovoltaic assembly (100), **characterized in that** it comprises :
- a cover plate (33), with dimensions sufficient to cover, when installed in the photovoltaic assembly between adjacent corners of at least two neighbouring photovoltaic modules (1, 1a, 1b, ...), the junction boxes and at least a portion of connecting cables (21) of said photovoltaic modules (1, 1a, 1b, ...), when installed,
- a spacing element (35), situated, when installed, between the cover plate (33) and a roof or support for the photovoltaic assembly (100), maintaining said cover plate (33) and roof or support at a distance corresponding to at least a maximum height of the photovoltaic modules (1, 1a, 1b, ...), attached, when assembled, to the cover plate (33).

2. Protector according to claim 1, **characterized in that** it further comprises a base element (31), configured to be, when installed, in contact with the roof or support or against a laminate (11) of the photovoltaic modules (1, 1a, 1b, ...) and attached to the end of the spacing element (35) opposite the cover plate (33).

3. Protector according to claim 1 or 2, **characterized in that** the spacing element (35) is a column with a square or rectangular or polygonal cross-section.

4. Protector according to claim 1 or 2, **characterized in that** it comprises at least two spacing elements (35) in form of feet attached to a peripheral portion of the cover plate (33).

5. Protector according to any of claims 2 to 4, **characterized in that** the base element (31) and the rim (33) are rectangular and **in that** the spacing element (35) is placed in a central portion of the base element (31) and the cover plate (33).

6. Protector according to claim 2, **characterized in that** the base element comprises an elevated central portion (31b), elevated with respect to the plane of the roof or support in a direction perpendicular to said plane, and **in that** the connecting cables (21) between neighbouring modules (1a, 1b) are disposed at least partially on said elevated central portion (31b) when the photovoltaic assembly (100) is assembled.

7. Protector according to claim 6, **characterized in that** the elevated central portion (31b) of the base element (31) comprises a passage for flowing water under the elevated central portion (31b).

8. Protector according to claim 6 or 7, **characterized in that** the elevated central portion (31b) comprises at least one cable management device (39).

9. Protector according to any of the preceding claims, **characterized in that** the cover plate (33) comprises a sloping outer rim (33a), which extends beyond and below the upper exterior corners of the junction boxes (15a, 15b) when assembled.

10. Protector according to any of the preceding claims, **characterized in that** it comprises a flat outer portion (31c) of the base element (31) that extends in parallel fashion to the roof or support of the photovoltaic assembly (100).

11. Protector according to any of the preceding claims, **characterized in that** the spacing element (35) is at least partially integrally formed with the base element (31) or the cover plate (33), and **in that** the spacing element (35), the cover plate (33), the base element (31) or the spacing element (35) comprises snap-in attaching means (37).

12. Photovoltaic assembly (100) **characterized in that** it comprises :
• a plurality of photovoltaic modules (1a, 1b, ...), each photovoltaic module (1a, 1b, ...) comprising:
▪ a laminate (11),
▪ a plurality of photovoltaic cells (13), carried by the laminate (11)at least two junction boxes (15a, 15b), attached to a front side of the laminate (11), placed in corner portions (5) along a common side of the laminate (11) parallel to the alignment (A),
• connection cables (21), spanning between the junction boxes (15a, 15b) of neighbouring photovoltaic modules (1, 1a, 1b, ...),
the photovoltaic modules (1, 1a, 1b, ...) being arranged so that junction boxes (15a, 15b) of two neighbouring photovoltaic modules (1, 1a, 1b, ...) face each-other with a gap between said photovoltaic modules (1, 1a, 1b, ...),
• at least one protector (3) according to any of claims 1 to 11, disposed in the gap between the neighbouring photovoltaic modules (1, 1a, 1b, ...) covering junction boxes (15a, 15b) and connection cables (21) of neighbouring photovoltaic modules (1, 1a, 1b, ...).

13. Photovoltaic assembly according to claim 12, **characterized in that** it comprises two lines or rows of photovoltaic modules (1, 1a, 1b, ...), arranged in symmetrical fashion around a central alignment axis (A) with their junction boxes facing said central alignment axis (A), the protectors (3) covering two or four junction boxes (15a, 15b) of neighbouring photovoltaic modules (1, 1a, 1b, ...) in the photovoltaic assembly (100).

14. Photovoltaic assembly according to any of claims 12 or 13, **characterized in that** the connection cables (21) are attached or disposed on the elevated central portion (31b) of the base element (31) when assembled.

15. Photovoltaic assembly according to any of claims 12 or 13, **characterized in that**:
• the laminate (11) of the photovoltaic modules (1, 1a, 1b, ...) is rectangular,
• the photovoltaic modules (1, 1a, 1b, ...) are arranged in a column or line along an alignment axis (A), with sides of the rectangular laminate (11) parallel to the alignment axis (A),
• the junction boxes (15a, 15b) are monopole junction boxes, each photovoltaic module (1, 1a, 1b, ...) having two junction boxes (15a, 15b) attached in corner portions (5) of the laminate (11) of a common side of said laminate (11) parallel to the alignment axis (A).
